# EUROPÄISCHE PATENTSCHRIFT

(11) **EP 0 538 319 B1**
(45) Veröffentlichungstag und Bekanntmachung des Hinweises auf die Patenterteilung: **30.11.1994**
(21) Anmeldenummer: 91912596.3
(22) Anmeldetag: 04.07.1991
(51) Int. Cl.: H04H 1/02, G07F 17/28

(54) **MÜNZBETÄTIGTER MUSIKAUTOMAT**
COIN-OPERATED AUTOMATIC MUSIC PLAYING MACHINE
JUKE-BOX ACTIONNE PAR DES PIECES DE MONNAIE

(30) Priorität: 07.07.1990 DE 4021707
(43) Veröffentlichungstag der Anmeldung: 28.04.1993
(73) Patentinhaber: NSM AKTIENGESELLSCHAFT, 55411 Bingen (DE)
(72) Erfinder: FRANK, Armin, D-7703 Mönchweiler (DE); NIEDERLEIN, Horst, D-6530 Bingen (DE)
(74) Vertreter: Becker, Bernd, Dipl.-Ing.
(86) Internationale Anmeldenummer: DE9100560
(87) Internationale Veröffentlichungsnummer: WO9201342

(56) Entgegenhaltungen:
- EP-A- 140 593
- WO-A-90/15497
- GB-A- 2 185 361
- GB-A- 2 193 420
- US-A- 4 471 379

## Beschreibung

Die Beschreibung bezieht sich auf einen münzbetätigten Musikautomaten mit einer Münzeinheit, einer Anzeige, einer Eingabetastatur und mindestens einem Lautsprecher, wobei der Musikautomat über eine zur Übertragung von Toninformationen geeignete Datenfernübertragungsleitung mit einem zentralen Musikspeicher verbunden ist, und Digital/Analogumsetzer und Verstärker für über die Datenfernübertragungsleitung aufgenommene Toninformationen aufweist.

Münzbetätigte Musikautomaten mit einer Münzeinheit, einer Anzeige, einer Eingabetastatur und mindestens einem Lautsprecher sind an vielen Orten, insbesondere in Gaststätten, aufgestellt. Gewöhnlich enthalten sie ein Schallplattenmagazin mit Wechsler und eine Abspieleinheit, von der eine von einem Benutzer gewählte Schallplatte abgespielt wird. Während einige Schallplatten, die fortlaufend mit einer gewissen Häufigkeit abgespielt werden, stets in dem Magazin bevorratet sind, werden andere Schallplatten, deren Titel nicht so gewünscht sind oder die die aktuellen Hits enthalten, häufiger ausgetauscht. Die am Musikautomaten vorgesehene Anzeige zeigt gewöhnlich die Titel der im Magazin bevorrateten Schallplatten an.

Bei einem in der DE-PS 29 44 177 beschriebenen münzbetätigten Musikautomaten werden Schallplatten verwendet, die auf jeder Seite eine maschinenlesbare Zusatzinformation enthalten, die beim Zugriff auf eine ausgewählte Schallplatte gelesen und gespeichert wird, wobei in einem Speicher die einer jeden Schallplatte entsprechende Position gespeichert ist. Das Lesen der jeweiligen Zusatzinformation ermöglicht es, Informationen über die Benutzung des Musikautomaten zu erhalten bzw. mittels eines in dem Musikautomaten enthaltenen Rechners derartige Daten auszuwerten. Dies erleichtert dem Aufsteller des Musikautomaten die Auswahl möglichst beliebter Schallplatten.

Mit zunehmender Verwendungshäufigkeit der Datenfernübertragung haben sich die Möglichkeiten der Teilnehmer an derartigen Übertragungssystemen fortlaufend erweitert. Es ist inzwischen möglich, Text-, Grafik-, Ton-, Bild- und Filminformationen mit ausreichender Qualität zu übertragen. Hierzu werden bei derartigen Informationsabrufsystemen mit Dialognetz schmalbandige Dialogsysteme verwendet. Zur Bildübertragung müssen Breitband-Informationsabrufsysteme verwendet werden. Bei einem in der DE-OS 32 07 022 beschriebenen Informationsabrufsystem für schmalbandige und breitbandige Informationen kann die Breitband-Informationsabrufzentrale als audiovisioelle Informationsbank mit entsprechender Steuerung ausgebildet sein, aus der die Breitbandinformation abgerufen wird. Als Datenfernübertragungsleitung wird ein digitales Fernsprechnetz oder ISDN-Netz verwendet. Bei Verwendung eines solchen ISDN-Netzes können hohe Übertragungsgeschwindigkeiten erzielt werden. Die hierbei verwendeten Datenreduktionsverfahren (1-Bit-Reduktionsverfahren) ermöglichen es, Musik mit hoher Tonqualität zu übertragen.

In der GB-A-2 193 420 ist ein Musikautomat mit einer Münzeinheit, einer Anzeige, einer Eingabetastatur und mindestens einem Lautsprecher beschrieben. Über eine Datenfernübertragungsleitung ist der Musikautomat mit einem zentralen Musikspeicher und Rechner verbunden.

Aus der GB-A-2 185 361 ist ein Terminal für den privaten Gebrach bekannt, das für eingehende Daten eine Codiereinrichtung und einen Speicher aufweist. Für die Datenabfrage und Anzeige sind eine Bedieneinheit sowie in Fernsehgerät und Hifi-System vorgesehen.

Der Erfindung liegt die Aufgabe zugrunde, einen münzbetätigten Musikautomaten zu schaffen, der kostengünstig herstellbar ist und einfache Bedieneigenschaften aufweist und wirtschaftlich betreibbar ist.

Diese Aufgabe ist bei einem münzbetätigten Musikautomaten mit den Merkmalen des Anspruchs 1 gelöst. Vorteilhafte Weiterbildungen des erfindungsgemäßen Musikautomaten sind Gegenstand der Unteransprüche.

Ein erfindungsgemäßer münzbetätigter Musikautomat enthält somit eine Münzeinhzeit, eine Anzeige, eine Eingabetastatur und mindestens einen Lautsprecher. Der Musikautomat ist über eine Datenfernübertragungsleitung mit einem zentralen Musikspeicher verbunden, wobei die Datenfernübertragungsleitung zur Übertragung von Toninformationen geeignet ist und für die übertragenen Toninformationen ein Zwischenspeicher vorgesehen ist. Ein weiterer Speicher dient zum Speichern häufig gespielter Musikstücke. Ferner weist der Musikautomat Digital/Analogumsetzer und Verstärker für über die Datenfernübertragungsleitung aufgenommene Toninformationen sowie einen Rechner, insbesondere Mikrocomputer, auf, der Benutzerdaten speichert und verarbeitet. Ein zentraler Rechner speichert und/oder verarbeitet Benutzerdaten der einzelnen Musikautomaten, wobei die Musikautomaten jeweils eine Code/-Bedieneinheit aufweisen, die den Zugriff zum zentralen Rechner und den entsprechenden Benutzerdaten freigibt.

Ein erfindungsgembäßer Musikautomat enthält somit selbst keine Abspieleinheit mit den entsprechenden zugehörigen weiteren Geräteeinheitn, sondern vielmehr ist der Musikautomat an einen zentralen Musikspeicher angeschlossen und kann von diesem die gewünschte Information, d.h. die gewählten Muskstücke, abrufen. Hierdurch ist der apparative Aufwand des einzelnen Musikautomaten geringer und auch der Umfang der Bedienungs- und Wartungsarbeiten ist geringer, denn eine Bevorratung und ein Austausch von Schallplatten am einzelnen Musikatuomaten entfällt. Dies ist nur noch beim zentralen Musikspeicher erforderlich, wobei dieser eine weitaus größere Anzahl von Musikstücken als ein einzelner Musikautomat enthalten kann. Für die Musikübertragung vom zentralen Musikspeicher zum einen einzelnen Musikautomaten ist eine Datenfernübertragungsleitung vorgesehen, die selbstverständlich zum Übertragen von Toninformationen geeignt sein muß und bei der es sich zweckmäßig um eine ISDN-Leitung handelt. Die Verwendung einer derartigen integrierten digitalen Datenübertragungstechnik ermöglicht eine Übertragung von Musikdaten mit hoher Qualität und Geschwindigkeit.

Der einzelne Musikautomat weist zum Umsetzen der übertragenen Audiosignale Digital/Analogumsetzer und Verstärker auf. Da ein Abspielgerät bei gewerblicher Aufstellung entfallen kann, kann der erfindungsgemäße Musikautomat sehr kompakt als sogenanntes Kabelendgerät, z.B. in Form eines Stand- oder Wandgerätes, ausgeführt sein.

Der Musikautomat enthält eine Anzeige, vorzugsweise eine Bildschirmeinheit auf der die über den zentralen Musikspeicher verfügbaren Musikstücke bzw. deren Titel, Verfasser, Interpreten, etc. angezeigt sind. Mittels der Eingabetastatur kann dann der gewünschte Titel ausgewählt werden. Nach dem Bezahlen der entsprechenden Gebühr wird dann das ausgewählte Musikstück vom Musikspeicher abgerufen und abgespielt. Der Hörer kann keinen Unterschied zur direkten Wiedergabe mittels eines im Musikautomaten eingebauten Abspielgerätes feststellen.

Durch die erfindungsgemäße Ausgestaltung von Musikautomaten ist es möglich, ein ganzes System von verhältnismäßig preiswerten Wiedergabe-Endgeräten bzw. Terminals und einem zentralen Musikspeicher mit entsprechend möglicher größerer Kapazität, die entsprechend besser ausgenutzt werden kann, zu verwenden.

Gemäß einer weiteren Ausgestaltung der Erfindung ist es auch möglich, das Endgerät in einen herkömmlichen Schallplattenspieler, ein Tonbandgerät, einen Fernseher etc. zu integrieren, die auch in Privalhaushalten aufgestellt sein können.

Zu diesem Zweck ist es lediglich erforderlich, die Münzeinheit zu modifizieren. Diese kann beispielsweise als Gebührenerfassungseinheit ähnlich wie bei Telefonen mit Abrechnungen, Abbuchungen und/oder Gebührenkonto ausgeführt werden.

Bei einem solchen Gesamtsystem ist der zentrale Speicher zweckmäßig eine Datenbank für Musikstücke, die entsprechend in eine Datenverarbeitungsanlage integriert sein kann.

Um die Datenübertragungsgeschwindigkeit ausnutzen zu können, werden die Audiosignale in einem Zwischenspeicher im Musikauotmaten, d.h. im Endgerät, gespeichert und von diesem auf den Lautsprecher gegeben. Hierdurch kann die kostspielige Datenübertragungszeit und Belegung der Datenfernübertragungsleitung möglichst klein gehalten werden, was auch den Vorteil hat, daß der Zugriff zum zentralen Speicher für möglichst viele Teilnehmer möglicht ist.

Im Falle von häufiger angewählten Titeln kann es vorkommen, daß diese gleichzeitig abgefragt werden sollen. Zu diesem Zweck ist bei dem erfindungsgemäßen Musikautomaten ein separater Speicher vorgesehen, bei dem es sich um eine Diskettenstation und/oder eine Festplatte handeln kann. Sogenannte Hits werden dann vom zentralen Speicher zum Musikautomaten übertragen und auf diesem Hit-Speicher gespeichert, wo sie auch direkt abgespielt werden können.

Bei dem zentralen Speicher kann es sich um ein Plattenabspielgerät mit einem Plattenmagazin von einhundert oder mehr Schallplatten handeln, die über Wechseleinheiten und Rechnersteuerung zum Abspielen entnommen und wieder rückgeführt werden können. Als Speichermedium können jedoch auch Magnetbandkassetten, Magnetplatten, optische Platten etc. eingesetzt werden.

Bei der Münzeinheit handelt es sich nicht zwingend um eine Münzeinheit im engeren Sinne, die zur Aufnahme und Verarbeitung von Münzen bestimmt ist. Vielmehr kann es sich bei dieser auch um eine Einheit zur Verarbeitung von Geldscheinen handeln. Des weiteren kann auch die Verarbeitung von Karten, insbesondere von magnetisch codierten Karten, vorgesehen sein, oder es können wie bereits erwähnt Abbuchungen und Kontoführungen für die einzelnen Endgeräte durchgeführt werden.

Erfindungsgemäß ist ein zentraler Rechner vorgesehen, der Benutzerdaten der einzelnen Musikautomaten speichert und/oder verarbeitet, und der Musikautomat ist mit dem zentralen Rechner verbunden und weist eine Code-Bedieneinheit auf, die den Zugriff zum zentralen Rechner und den entsprechenden Benutzerdaten freigibt. Diese Ausgestaltung ermöglicht es dem Aufsteller eines solchen Musikautomaten, ihn interessierende Automaten- und Benutzerdaten abzurufen. Es kann auf diese Weise einfach festgestellt werden, welche Musikstücke am häufigsten gespielt werden, es kann eine Popularitätsanzeige erhalten werden, der Kassenstand entsprechend dem Abruf der gewählten Musikstücke kann ermittelt werden und es können auch Abrechnungen über den zentralen Rechner durchgeführt werden.

Der Musikautomat enthält vorteilhaft selbst einen Rechner, insbesondere einen Mikrocomputer, der Benutzerdaten speichert und verarbeitet, sowie ferner eine Code-Bedieneinheit, die den Zugriff zu den Rechner- und Benutzerdaten freigibt. Durch diese dezentrale Erfassung der Abspielungen ist es dem Betreiber eines solchen Musikautomaten möglich, ohne kostenverursachende Benutzung der Fernübertragungsleitung Daten über die Benutzung des Musikautomaten und Abspielhäufigkeiten einzelner Titel zu ermitteln.

Wie erwähnt kann der zentrale Musikspeicher eine Abspieleinheit und optisch oder magnetisch abspielbare Informationsträger für Musikstücke umfassen. Ferner kann in dem zentralen Musikspeicher auch weitere Toninformation enthalten sein, z.B. Hörspiele, Mitschnitte von Reden, etc. Der zentrale Speicher kann auch Bildinformation enthalten, und soweit das Musikgerät eine Bildschirmeinheit aufweist, können zusätzlich oder alternativ zu der Audiosignalübertragung eine Videosignalübertragung vorgenommen werden und beispielsweise Tonfilme abgespielt werden.

Die Erfindung wird im folgenden weiter anhand eines Ausführungsbeispiels und der Zeichnung beschrieben. In der Zeichnung zeigen:
- Fig. 1: ein schematisches Blockdiagramm eines erfindungsgemäßen Musikautomatensystems und
- Fig. 2: eine schematische Darstellung eines Musikautomatenendgerätes.

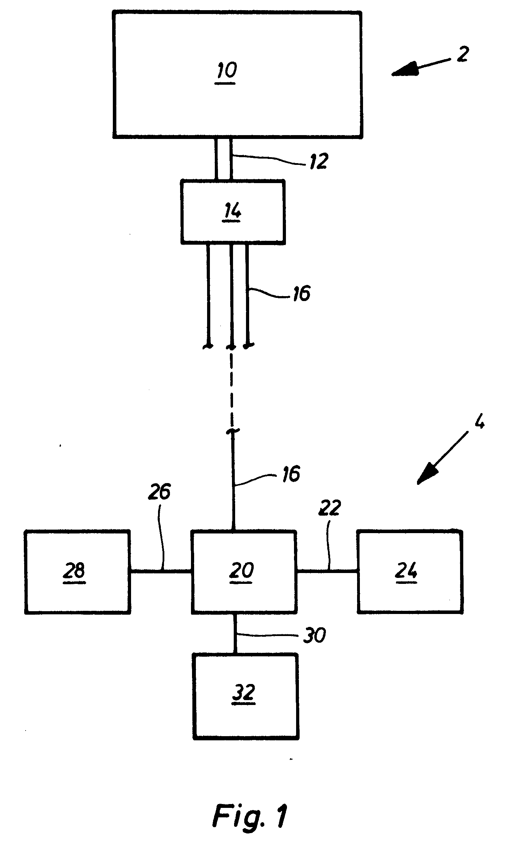

Bei einem in Fig. 1 schematisch veranschaulichten Musikautomatensystem ist eine zentrale Einheit 2 und eine Vielzahl dezentraler Endgeräte 4 vorgesehen, die mit der zentralen Einheit 2 verbunden sind.

Die zentrale Einheit 2 umfaßt einen zentralen Speicher 10, der mit einem nicht dargestellten Rechner verbunden sein kann. Der zentrale Speicher 10 kann eine Magazinanordnung von Schallplatten mit Abspielgerät oder magnetische oder optische Platten mit gespeicherter Toninformation enthalten. Der zentrale Speicher 10 ist über eine Busleitung 12 mit einer Eingabe/Ausgabeeinheit 14 verbunden, die entsprechend der Auslegung und Ausgestaltung des zentralen Speichers mit einer Steuereinheit, einem Rechner etc. ausgestattet sein kann. An die Eingabe/Ausgabeeinheit 14 ist eine Vielzahl von Datenfernübertragungsleitungen 16 angeschlossen, bei denen es sich z.B. um ISDN-Leitungen handelt.

Die Datenfernübertragungsleitungen 16 sind jeweils mit einer Eingabe/Ausgabeeinheit 20 eines Endgerätes 4, verbunden, das vor Ort einen herkömmlichen Musikautomaten ersetzen soll. Die Eingabe/Ausgabeeinheit 20 ist über eine Leitung 22 mit einer Bildschirmeinheit 24 verbunden, die die Anzeige des Endgerätes 4 darstellt. Auf der Bildschirmeinheit 24 werden z.B. die mittels des Musikautomaten abspielbaren Musikstücke angezeigt, wobei z.B. diese Musikstücke nach Titel, Interpreten, Hitliste und dergleichen sortiert sein können. Des weiteren ist die Eingabe/Ausgabeeinheit 20 über eine Leitung 26 mit einer Eingabetastatur 28 verbunden. Die über die Eingabetastatur eingegebenen Auswahlbefehle werden auf der Bildschirmeinheit 24 angezeigt und das jeweils ausgewählte Musikstück sichtbar gemacht bzw. gekennzeichnet. Zur endgültigen Auswahl kann die Eingabetastatur eine Bestätigungstaste umfassen. Mit der Eingabe/Ausgabeeinheit ist ferner über eine weitere Leitung 30 ein Lautsprechersystem 32 verbunden. Im übrigen kann die Eingabetastatur auch durch ein Touch-Screen-System ersetzt werden.

Das Endgerät 4 kann soweit ausgestaltet sein, daß es lediglich die zur Auswahl von Musikstücken erforderlichen Eingabe/Ausgabeeinheiten und die notwendigen Wiedergabeeinheiten wie das Lautsprechersystem 32 enthält. Die übrigen Einheiten können Teil der zentralen Einheit 2 sein, die je nach Auslegung des Musikautomatensystems auch die Verarbeitung der Benutzerdaten durchführen kann. In diesem Fall umfaßt die zentrale Einheit einen zentralen Rechner. Zur Sicherung der im zentralen Rechner gespeicherten und mit diesem verarbeiteten Daten ist dann im externen Endgerät 4 eine Code/Bedieneinheit vorgesehen, die ebenfalls soweit reduziert sein kann, daß ein Kennwort (password) gespeichert ist, mit dessen Eingabe der Zugriff zum Rechner und den Benutzerdaten freigegeben wird. Hierdurch kann der Geräteaufsteller Abrechnungen und Auswertungen zentral gesteuert durchführen. Auch ist die Überwachung und Abgabe der GEMA-Gebühren bei einem derartigen zentralisierten System vereinfacht.

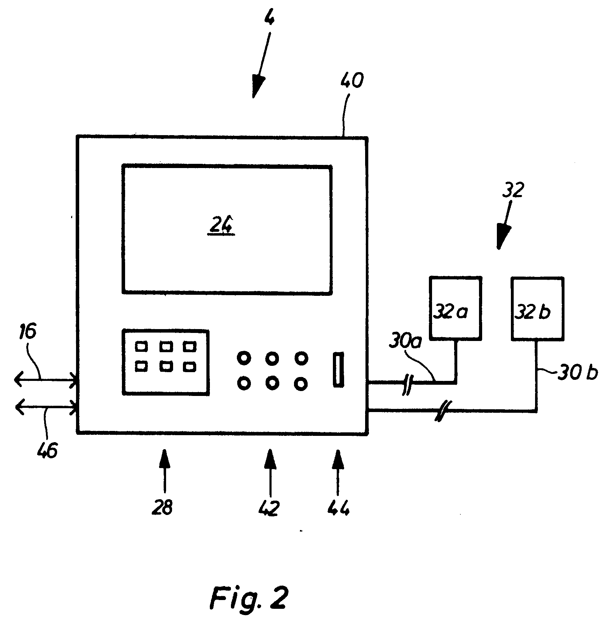

Der Aufbau eines Endgerätes 4 ist in Fig. 2 schematisch dargestellt. Dieser Musikautomat umfaßt ein Gehäuse 40, das mit einer Bildschirmeinheit 24 und einer Eingabetastatur 28 versehen ist. Des weiteren sind Bedienknöpfe und -tastaturen 42 vorgesehen, mit denen die Bildschirmanzeige und die Lautsprecher 32a, 32b des Lautsprechersystems 32 eingestellt werden können. Sie umfassen auch einen Ein/Ausschalter. Des weiteren ist auf der Vorderseite des Gehäuses 40 ein Schlitz 44 vorgesehen, der zur Aufnahme von magnetisch codierten Karten anstelle einer herkömmlichen Münzeinheit vorgesehen ist. Das Gehäuse 40 weist einen Anschluß für eine Datenfernübertragungsleitung 16 auf. Des weiteren ist ein Anschluß für ein Netzkabel 46 vorgesehen.

## Patentansprüche

1. Münzbetätigter Musikautomat, mit einer Münzeinheit, einer Anzeige (24), einer Eingabetastatur (28) und mindestens einem Lautsprecher (32), wobei der Musikautomat (4) über eine zur Übertragung von Toninformationen geeignete Datenfernübertragungsleitung mit eine zentralen Musikspeicher (10) verbunden ist, und Digital-Analogumsetzer und Verstärker für über die Datenfernübertragungsleitung (16) aufgenommene Toninformationen aufweist, dadurch gekennzeichnet, daß
- ein Zwischenspeicher für über die Datenfernübertragungsleitung aufgenommene Toninformationen vorgesehen ist,
- ein Speicher für häufig gespielte Musikstücke vorgesehen ist,
- ein zentraler Rechner vorgesehen ist, der Benutzerdaten der einzelnen Musikautomaten speichert und/oder verarbeitet, wobei der mit dem zentralen Rechner verbundene Musikautomat eine Code-Bedieneinheit aufweist, die den Zugriff zum zentralen Rechner und den entsprechenden Benutzerdaten freigibt, und
- der Musikautomat einen Rechner, insbesondere Mikrocomputer, der Benutzerdaten speichert und verarbeitet, aufweist.

2. Münzbetätigter Musikautomat nach Anspruch 1, dadurch gekennzeichnet, daß die Datenfernübertragungsleitung (16) eine ISDN-Leitung ist.

3. Münzbetätigter Musikautomat nach Anspruch 1 oder 2, dadurch gekennzeichnet, daß der zentrale Speicher eine Datenbank für Musikstücke ist.

4. Münzbetätigter Musikautomat nach einem der Ansprüche 1 bis 3, dadurch gekennzeichnet, daß der Zwischenspeicher und/oder der Speicher eine Diskettenstation und/oder eine Festplatte und/oder Cachespeicher ist.

5. Münzbetätigter Musikautomat nach einem der Ansprüvhe 1 bis 4, dadurch gekennzeichnet, daß die Anzeige (24) eine Bildschirmeinheit ist.

6. Münzbetätigter Musikautomat nach einem der Ansprüche 1 bis 5, dadurch gekennzeichnet, daß die Münzeinheit zur Verarbeitung von Geldscheinen ausgebildet ist.

7. Münzbetätigter Musikautomat nach einem der Ansprüche 1 bis 6, dadurch gekennzeichnet, daß die Münzeinheit (44) zur Verarbeitung von Karten, insbesondere magnetisch kodierten Karten, ausgebildet ist.

8. Münzbetätigter Musikautomat nach einem der Ansprüche 1 bis 7, dadurch gekennzeichnet, daß der zentrale Musikspeicher eine Abspieleinheit und optische oder magnetische abspielbare Informationsträger für Musikstücke umfaßt.

9. Münzbetätigter Musikautomat nach einem der Ansprüche 1 bis 8, dadurch gekennzeichnet, daß der zentrale Musikspeicher weitere Toninformationen enthält.

10. Münzbetätigter Musikautomat nach einem der Ansprüche 1 bis 9, bei dem das Musikgerät eine Bildschirmeinheit aufweist, dadurch gekennzeichnet, daß der zentrale Musikspeicher graphische und/oder Bildinformationen enthält.

11. Münzbetätigter Musikautomat nach einem der Ansprüche 1 bis 10, als Abspielgerät, dadurch gekennzeichnet, daß die Münzeinheit als Gebührenerfassungseinheit mit Abrechnungen, Abbuchungen und/oder Gebührenkonto ausgeführt ist.

## Claims

1. Coin-operated juke box, including a coin unit, a display (24), an input keyboard (28) and at least one loudspeaker (32), the juke box (4) being connected to a central music store (10) via a remote data transmission line suitable for transmitting audio information, and said juke box having digital-analog converters and amplifiers for audio information received via the remote data transmission line (16), characterised in that
- an intermediate store is provided for audio information received via the remote data transmission line,
- a store for frequently played pieces of music is provided,
- a central computer is provided, which stores and/or processes user data for the individual juke boxes, the juke box which is connected to the central computer having a code control unit which gives access to the central computer and the appropriate user data, and
- the juke box has a computer, more especially a microcomputer, which stores and processes user data.

2. Coin-operated juke box according to claim 1, characterised in that the remote data transmission line (16) is an ISDN line.

3. Coin-operated juke box according to claim 1 or 2, characterised in that the central store is a data bank for pieces of music.

4. Coin-operated juke box according to one of claims 1 to 3, characterised in that the intermediate store and/or the store is a diskette station and/or a hard disc and/or a cache store.

5. Coin-operated juke box according to one of claims 1 to 4, characterised in that the display (24) is a visual display unit.

6. Coin-operated juke box according to one of claims 1 to 5, characterised in that the coin unit is configured to process banknotes.

7. Coin-operated juke box according to one of claims 1 to 6, characterised in that the coin unit (44) is configured to process cards, more especially magnetically coded cards.

8. Coin-operated juke box according to one of claims 1 to 7, characterised in that the central music store includes a play-back unit and optical or magnetic information carriers for pieces of music, which carriers can be played-back.

9. Coin-operated juke box according to one of claims 1 to 8, characterised in that the central music store contains additional audio information.

10. Coin-operated juke box according to one of claims 1 to 9, wherein the music apparatus has a visual display unit, characterised in that the central music store contains graphical and or image information.

11. Coin-operated juke box according to one of claims 1 to 10, as a play-back apparatus, characterised in that the coin unit is configured as a payment determining unit with deductions, direct debits and/or statement of account.

## Revendications

1. Juke-box actionné par des pièces de monnaie, avec une unité de pièces de monnaie, un affichage (24), un clavier d'entrée (28) et au moins un haut-parleur (32), le juke-box (4) étant relié à une mémoire de musique centrale (10) par l'intermédiaire d'une ligne de télétransmission de données propre à la transmission d'informations sonores et présentant des convertisseurs analogiques-numériques et des amplificateurs pour les informations sonores reçues par l'intermédiaire de la ligne de télétransmission de données, caractérisé en ce que
- une mémoire intermédiaire est prévue pour les informations sonores reçues par l'intermédiaire de la ligne de télétransmission de données,
- une mémoire est prévue pour les morceaux de musique fréquemment joués,
- un ordinateur central est prévu, qui mémorise et/ou traite les données d'utilisateur des différents juke-boxes, le juke-box relié à l'ordinateur central présentant une unité de service à code qui libère l'accès à l'ordinateur central et aux données d'utilisateur correspondantes, et
- le juke-box présentant un ordinateur, en particulier micro-ordinateur, qui mémorise et traite les données d'utilisateur.

2. Juke-box actionné par des pièces de monnaie selon la revendication 1, caractérisé en ce que la ligne de télétransmission de données (16) est une ligne RNIS.

3. Juke-box actionné par des pièces de monnaie selon la revendication 1 ou 2, caractérisé en ce que la mémoire centrale est une banque de données pour morceaux de musique.

4. Juke-box actionné par des pièces de monnaie selon l'une des revendications 1 à 3, caractérisé en ce que la mémoire intermédiaire et/ou la mémoire est un poste de disquettes et/ou un disque inamovible et/ou une mémoire cache.

5. Juke-box actionné par des pièces de monnaie selon l'une des revendications 1 à 4, caractérisé en ce que l'affichage (24) est une unité d'écran.

6. Juke-box actionné par des pièces de monnaie selon l'une des revendications 1 à 5, caractérisé en ce que l'unité de pièces de monnaie est conçue pour le traitement de billets de banque.

7. Juke-box actionné par des pièces de monnaie selon l'une des revendications 1 à 6, caractérisé en ce que l'unité de pièces de monnaie (44) est conçue pour le traitement de cartes, en particulier de cartes à codage magnétique.

8. Juke-box actionné par des pièces de monnaie selon l'une des revendications 1 à 7, caractérisé en ce que la mémoire de musique centrale comprend une unité de lecture et des supports d'information optiques ou magnétiques pouvant être lus.

9. Juke-box actionné par des pièces de monnaie selon l'une des revendications 1 à 8, caractérisé en ce que la mémoire de musique centrale contient d'autres informations sonores.

10. Juke-box actionné par des pièces de monnaie selon l'une des revendications 1 à 9, dans lequel l'appareil à musique présente une unité d'écran, caractérisé en ce que la mémoire de musique centrale contient des informations graphiques et/ou d'images.

11. Juke-box actionné par des pièces de monnaie selon l'une des revendications 1 à 10, comme appareil de lecture, caractérisé en ce que l'unité de pièces de monnaie est réalisée comme une unité de saisie de taxes avec décomptes, prélèvements et/ou compte de taxes.
